# EUROPÄISCHE PATENTANMELDUNG

(11) **EP 2 443 915 A1**
(43) Veröffentlichungstag der Anmeldung: **25.04.2012**
(21) Anmeldenummer: 11401586.0
(22) Anmeldetag: 06.09.2011
(51) Int. Cl.: A01B 29/04, A01B 73/00

(54) **Fahrwerk für ein landwirtschaftliches Gerät**

(30) Priorität: 29.09.2010 DE 102010037843
(71) Anmelder: Amazonen-Werke H. Dreyer GmbH & Co. KG, 49205 Hasbergen (DE)
(72) Erfinder: Tiessen, Reimer Uwe, 26135 Oldenburg (DE)

(57) **Zusammenfassung**

Fahrwerk für ein landwirtschaftliches Gerät, insbesondere Bodenbearbeitungs- und/oder Verteilmaschine, mit mehreren nebeneinander in Reihe angeordneten Reifen (8), die einen Reifenpacker nach Art einer unterteilten Walze bilden, wobei die Reifen mittels drehfest an einem sich quer zur Fahrtrichtung des Gerätes erstreckenden Tragbalken angeordneten Schwingen angeordnet sind, wobei die Reifen der Walze durch Verdrehen des Tragbalkens um eine quer zur Fahrtrichtung verlaufende Drehachse aus der Arbeitsstellung in eine Transportstellung, in welcher zumindest einige der Reifen das Fahrwerk des Gerätes bilden, absenkbar und aus einer Transportstellung in eine Arbeitsstellung anhebbar sind. Um das Fahrwerk für ein landwirtschaftliches Gerät zu vereinfachen, ist vorgesehen, dass die das Fahrwerk bildenden Reifen (8') in Transportposition mit einem höheren Luftdruck als die nicht das Fahrwerk in Transportposition des Gerätes bildenden Reifen (8'') beaufschlagbar sind.

## Beschreibung

Die Erfindung betrifft ein Fahrwerk für ein landwirtschaftliches Gerät gemäß des Oberbegriffes des Patentanspruches 1.

Ein derartiges Fahrwerk für ein landwirtschaftliches Gerät ist beispielsweise durch die DE 197 46 927 C2 bekannt. Diese landwirtschaftliche Maschine ist als Sämaschine ausgebildet und weist im hinteren Bereich zueinander versetzte Stützräder auf, wobei die dem mittleren Bereich der Sämaschine zugeordneten Stützräder als Fahrwerk dienen können. Beim Befahren von Straßen und/oder Wegen mit einer zentralen Dammkrone ergibt sich ein instabiles Fahrverhalten.

Ein weiteres Fahrwerk ist durch die EP 1 594 355 B1 bekannt. Die Reifenelementen, die für den Transport vorgesehen sind, werden mit einem höheren Luftdruck als die übrigen Reifenelemente während der Nutzung der Walze als Fahrwerk beaufschlagt. Dieses geschieht jedoch in Verbindung mit der Erhöhung des Druckes in dem Druckausgleichssystem. Daher ist dieses System sehr aufwändig.

Der Erfindung liegt die Aufgabe zu Grunde, das Fahrwerk für ein landwirtschaftliches Gerät zu vereinfachen.

Diese Aufgabe der erfindungsgemäß dadurch gelöst, dass die das Fahrwerk bildenden Reifen in Transportposition mit einem höheren Luftdruck als die nicht das Fahrwerk in Transportposition des Gerätes bildenden Reifen beaufschlagbar sind.

Infolge dieser Maßnahme lässt sich in einfacher Weise der Luftdruck in den für das Fahrwerk vorgesehenen Reifen in einfacher Weise erhöhen.

Es ist lediglich erforderlich, um das Fahrwerk des Gerätes für den Transport optimal herzurichten, dass nur die das eigentliche Fahrwerken bilden den Rädern der Walze über die Reifen Druck Regelanlage mit einem entsprechend höheren Druck beaufschlagt werden. Die übrigen Reifen der Walze werden mit dem niedrigen Druck, der auch für den Einsatz auf dem Acker verwendet wird, gefahren.

Die Überführung des Gerätes in eine Konfiguration mit einem optimierten Fahrwerk lässt sich in einfacher Weise dadurch erreichen, dass dem Fahrwerk eine Reifendruckregelanlage zugeordnet ist, dass mittels der Reifendruckregelanlage der Luftdruck für die das Fahrwerk in Transportposition des Gerätes bildenden Reifen veränderbar ist.

Um auf einfache Weise ohne zusätzliche Umstellmaßnahmen ein stabiles Fahr- und Bremsverhalten des Gerätes auch auf Straßen und Wegen mit größeren zentralen Dammkronen zu erreichen, ist vorgesehen, dass in Arbeitsstellung der Walze zumindest einige der Reifen, die einander benachbart sind, in Fahrtrichtung versetzt zueinander angeordnet sind, dass zumindest einige der Reifen mittels der Schwingen in Transportstellung des Gerätes derart an dem Tragbalken angeordnet sind, dass eine an die Aufstandsfläche der Reifen auf dem Boden angelegte Hüllkurve einen zur Mitte des Gerätes ansteigenden Verlauf aufweist.

Infolge dieser Maßnahme wird bei Fahrwerken für landwirtschaftliche Geräte, bei denen in erfindungsgemäßer Weise die Reifen der Walze in Fahrtrichtung entsprechend zueinander versetzt sind, durch die Umstellung von der Arbeitsposition auf die Transportposition in überraschend einfacher Weise erreicht, dass im wesentlichen nur äußere Räder als Fahrwerk dienen, das heißt, dass diese Räder mit der größten Belastung von dem Gewicht des Gerätes beaufschlagt werden. Somit ergibt sich also auch gleichzeitig ein sehr gutes Bremsverhalten für das Gerät, wenn äußere Räder, die der größten Belastung unterliegen, für das Bremsen des Gerätes mit Bremseinrichtungen versehen sind.

Eine vorteilhafte Anordnung der Räder in erfindungsgemäßer Weise lässt sich dadurch erreichen, dass die Hüllkurve torbogenförmig verläuft.

Um das erfindungsgemäße stabile Fahr- und Bremsverhalten in einfacher Weise zu erreichen, ist vorgesehen, dass die Hüllkurve konkav verläuft.

Um die erfindungsgemäße Anordnung und Wirkung in einfacher Weise zu erreichen, ist vorgesehen, dass einer an die vorderste und/oder hinterste Umfangsfläche der Reifen der sich in Arbeitsstellung befindlichen Walze angelegten Hüllkurve in der Ansicht von oben gekrümmt verläuft und zwar derart, dass bezogen auf die Fahrtrichtung die Hüllkurve konkav ausgestaltet ist.

Um ein stabiles und gutes Bremsverhalten des Gerätes zu erreichen, ist vorgesehen, dass zumindest den jeweils seitlich äußersten Reifen der Walze eine Bremseinrichtung zugeordnet ist.

Zusammenfassend sei noch auf folgendes hingewiesen:
Die die als Reifen ausgebildeten Räder der Walzen haben einen gewissen Achsversatz zueinander. Hierdurch gibt es immer eine Relativbewegung der Reifen unter einander und die Verstopfungsempfindlichkeit nimmt ab. Bei der Transportfahrt lastet das Gewicht der Maschine auf den äußeren Reifen, so dass auf mittig überhöhten Straßen und/oder Wegen die Kippgefahr abnimmt und die das Gewicht tragenden äußeren Räder mit einer Bremse ausgestattet werden können, um die Maschine bremsen zu können.

Weitere Einzelheiten der Erfindung sind der Beispielsbeschreibung und den Zeichnungen zu entnehmen. Hierbei zeigen
- Fig. 1: die als Fahrwerk ausgebildete Walze des landwirtschaftlichen Gerätes in Arbeitsstellung und perspektivischer Darstellung,
- Fig. 2: die als Fahrwerk ausgebildete Walze des landwirtschaftlichen Gerätes in Arbeitsstellung und Seitenansicht,
- Fig. 3: die als Fahrwerk ausgebildete Walze des landwirtschaftlichen Gerätes in Arbeitsstellung und in der Ansicht von vorne,
- Fig. 4: die als Fahrwerk ausgebildete Walze des landwirtschaftlichen Gerätes in Arbeitsstellung und in der Draufsicht,
- Fig. 5: die als Fahrwerk ausgebildete Walze des landwirtschaftlichen Gerätes in Transportstellung und perspektivischer Darstellung,
- Fig. 6: die als Fahrwerk ausgebildete Walze des landwirtschaftlichen Gerätes in Transportstellung und Seitenansicht,
- Fig. 7: die als Fahrwerk ausgebildete Walze des landwirtschaftlichen Gerätes in Transportstellung und in der Ansicht von vorne und
- Fig. 8: die als Fahrwerk ausgebildete Walze des landwirtschaftlichen Gerätes in Transportstellung und in der Ansicht von vorne und im ausgehobenen und unbelasteten Zustand.

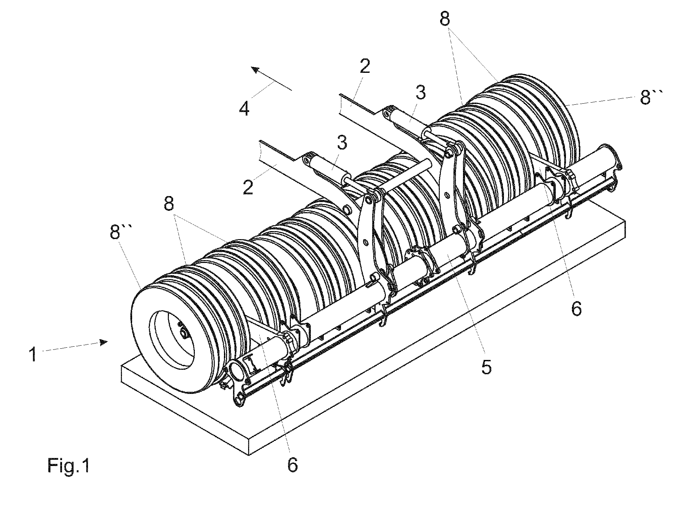

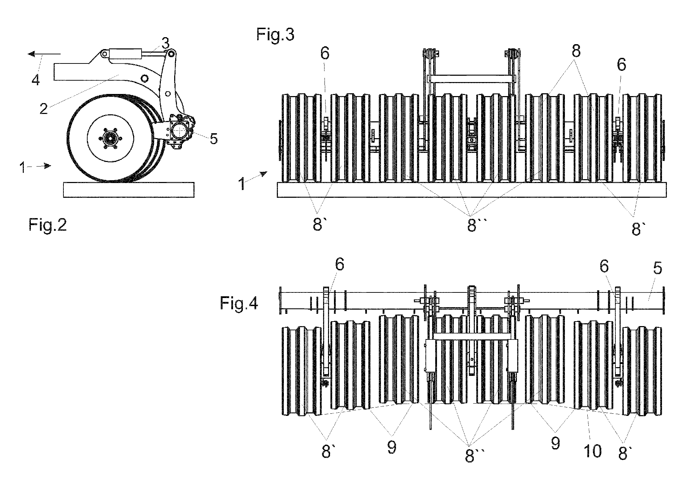

Die Walze 1 gemäß den Fig. 1 bis 7 ist einem nicht dargestellten Bodenbearbeitungsgerät und/oder Verteilmaschine zugeordnet. Über die Kupplungselemente 2 ist die Bodenwalze mit dem Rahmen des Bodenbearbeitungsgerätes und/oder der Sämaschine gekoppelt. Die Bodenwalze 1 dient neben dem verdichten von gelockertem Boden auch als Fahrwerk für das als Bodenbearbeitungsgerät und/oder Verteilmaschine ausgebildete landwirtschaftliche Gerät, wie weiter unten noch erläutert wird.

Die Walze 1 weist einen sich quer zur Fahrtrichtung 4 erstreckenden Tragbalken 5 auf, an dem über drehfest an dem Tragbalken 5 angeordnete Schwingen 6 die auf Achsen 7 gelagerten Räder 8 befestigt sind. Die Räder 8 weisen Reifen auf, die einen Reifenpacker nach Art einer unterteilten Walze bilden. Die Reifen 8 sind nebeneinander in Reihe angeordnet. In Arbeitsstellung, wie in den Fig. 1 bis 4 gezeigt, sind die Reifen 8 der Walze 1 in Fahrtrichtung 4 versetzt zueinander angeordnet. Hierbei sind die Reifen 8 mittels der Schwingen 6 in der Draufsicht gesehen bezogen auf die Fahrtrichtung 4, so angeordnet, dass eine durch den vordersten Bereich 9 der Reifen 8' und 8" gezogene Kurve eine nach hinten durchgedrückte Hüllkurve 10 entsteht. Somit verläuft die an die vorderste Umfangsfläche 9 der Reifen 8 der sich in Arbeitsstellung befindlichen Walze 1 angelegten Kurve in der Ansicht von oben gekrümmt und zwar derart, dass bezogen auf die Fahrtrichtung 4 die Hüllkurve 10 konkav ausgestaltet ist.

Hierbei ist bei diesem Ausführungsbeispiel bei einer geraden Anzahl von Reifen 8 einer Walze 1 die Anordnung so gewählt, dass die mittleren Reifen 8" auf gleicher Höhe und nicht zueinander versetzt sind.

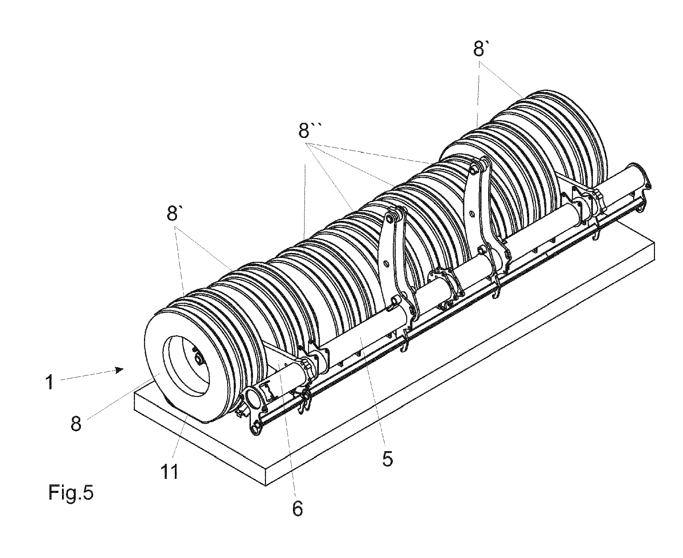

Über die Kupplungselemente 2 und 3 ist die Walze 1 derart am Rahmen des Bodenbearbeitungsgerätes und/oder der Verteilmaschine angeordnet, dass die Walze 1 durch verdrehen des Tragbalkens 5 um die quer zur Fahrtrichtung 4 verlaufende Drehachse 11 aus der in den Fig. 1 bis 4 dargestellten Arbeitsstellung in die in den Fig. 5 bis 7 dargestellten Transportstellung mittels der als Hydraulikzylinder 3 ausgebildeten oberen Kupplungselemente zu verschwenken ist. In der Transportstellung bildet die Walze 1 für den Transport das Fahrwerk. Durch das Verschwenken der Walze 1 sind die Reifen 8 der als Fahrwerk dienenden Walze 1 in eine Transportstellung absenkbar und in einer Arbeitsstellung anhebbar.

Bezogen auf die Transportstellung gemäß den Fig. 5 - 7 sind die Reifen 8 mittels der Schwingen 6 in Transportstellung des Gerätes derart an dem Tragbalken 5 angeordnet, dass eine an die Aufstandsfläche 9 der Reifen 8 auf dem Boden angelegte Kurve 10 einen zu Mitte des Gerätes ansteigenden Verlauf aufweist. Somit ist die Hüllkurve 10 leicht torbogenförmig verlaufend ausgestaltet und weist einen konkaven Verlauf auf.

Die jeweils seitlich äußersten Reifen 8' der Walze 1 ist eine nicht dargestellte Bremseinrichtung zugeordnet. Dadurch, dass die Reifen 8 in erfindungsgemäßer Weise angeordnet sind, werden die seitlich äußersten Reifen 8' der Walze 1 mit der höchsten Stützlast in Transportstellung beaufschlagt. Hierdurch ergibt sich sowohl ein gutes Fahr- wie auch Bremsverhalten für das Fahrwerk des Gerätes.

Damit die seitlich äußeren Reifen 8' in der Transportstellung die hohe Stützlast tragen können, werden sie wieder nachfolgend beschrieben für den Transport mit einem höheren Druck als die mittleren Reifen 8" beaufschlagt.

Die äußeren Reifen 8' der Bodenwalze 1 bilden in Transportposition der Walze das Fahrwerk, wie vor beschrieben. Diesen Reifen 8' ist eine nicht dargestellte Reifendruckregelanlage zugeordnet. Mittels dieser Reifendruckregelanlage ist der Luftdruck für die das Fahrwerk in Transportposition des Gerätes bildenden Reifen 8', gemäß dem Ausführungsbeispiel die äußeren Reifen 8' veränderbar. Hierdurch sind diese Reifen 8' mit einem höheren Luftdruck als die nicht das Fahrwerk in Transportposition des Gerätes bildenden Reifen 8" beaufschlagbar.

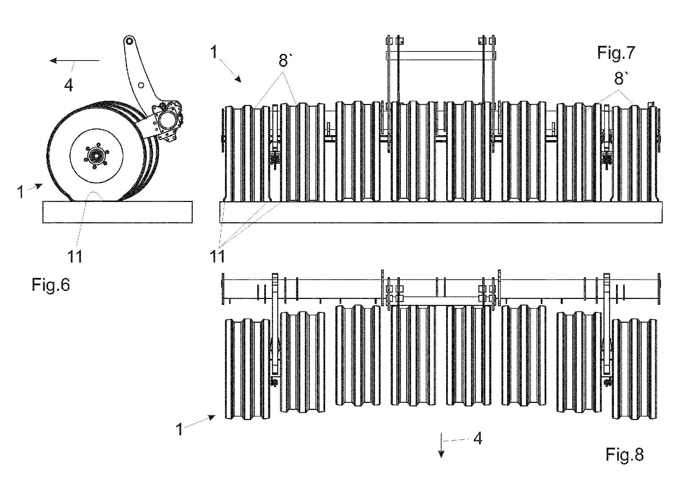

Wie die Fig. 5, 6 und 7 zeigen sind die äußeren Reifen 8' mit einem derartigen Luftdruck beaufschlagbar, da sie zwar im Luftflächenbereich 11 leicht zusammengedrückt werden, aber so jedoch in der Lage sind, das gesamte Gewicht des Geräte ohne Schaden zunehmen zu tragen. Hierbei werden die äußeren Reifen 8' so zusammengedrückt, dass die mittleren Reifen 8" auch leichte Bodenberührung erhalten können, wie die Fig. 7 zeigt. Wenn die in Transportposition gemachte Walze nicht belastet würde, ergibt sich die Fig. 8 dargestellte Situation.

Somit können die Reifen 8 in Arbeitsstellung, wenn alle reifen Tragfunktion haben, insgesamt mit einem niedrigen Druck gefahren werden, wobei nur bei dem Bringen der Walze 1 Transportposition zum Transport des Gerätes die äußeren Reifen 8' für den Transport mit einem höheren geeigneten Luftdruck beaufschlagt werden. Somit werden die mittleren Reifen 8" auch während des Transportes mit einem niedrigen Druck gefahren und nehmen keinen Schaden, da die äußeren Reifen während des Transportes über die Reifendruckregelanlage mit einem höheren Druck beaufschlagt worden sind.

## Patentansprüche

1. Fahrwerk für ein landwirtschaftliches Gerät, insbesondere Bodenbearbeitungs- und/oder Verteilmaschine, mit mehreren nebeneinander in Reihe angeordneten Reifen, die einen Reifenpacker nach Art einer unterteilten Walze bilden, wobei die Reifen mittels drehfest an einem sich quer zur Fahrtrichtung des Gerätes erstreckenden Tragbalken angeordneten Schwingen angeordnet sind, wobei die Reifen der Walze durch Verdrehen des Tragbalkens um eine quer zur Fahrtrichtung verlaufende Drehachse aus der Arbeitsstellung in eine Transportstellung, in welcher zumindest einige der Reifen das Fahrwerk des Gerätes bilden, absenkbar und aus einer Transportstellung in eine Arbeitsstellung anhebbar sind, **dadurch gekennzeichnet, dass** die das Fahrwerk bildenden Reifen (8') in Transportposition mit einem höheren Luftdruck als die nicht das Fahrwerk in Transportposition des Gerätes bildenden Reifen (8") beaufschlagbar sind.

2. Fahrwerk nach Anspruch 1, **dadurch gekennzeichnet, dass** dem Fahrwerk eine Reifendruckregelanlage zugeordnet ist, dass mittels der Reifendruckregelanlage der Luftdruck für die das Fahrwerk in Transportposition des Gerätes bildenden Reifen (8') veränderbar ist.

3. Fahrwerk nach Anspruch eins, **dadurch gekennzeichnet, dass** in Arbeitsstellung der Walze (1) zumindest einige der Reifen (8, 8', 8''), die einander benachbart sind, in Fahrtrichtung (4) versetzt zueinander angeordnet sind, dass zumindest einige der Reifen (8, 8', 8") mittels der Schwingen (6) in Transportstellung des Gerätes derart an dem Tragbalken (5) angeordnet sind, dass eine an die Aufstandsfläche (9) der Reifen (8, 8', 8") auf dem Boden angelegte Hüllkurve (10) einen zur Mitte des Gerätes ansteigenden Verlauf aufweist.

4. Fahrwerk nach Anspruch 3, **dadurch gekennzeichnet, dass** die Hüllkurve (10) torbogenförmig verläuft.

5. Fahrwerk nach Anspruch 4, **dadurch gekennzeichnet, dass** die Hüllkurve (10) konkav verläuft.

6. Fahrwerk nach zumindest einem der vorstehenden Ansprüche, **dadurch gekennzeichnet, dass** einer an die vorderste und/oder hinterste Umfangsfläche der Reifen (8) der sich in Arbeitsstellung befindlichen Walze (1) angelegten Hüllkurve (10) in der Ansicht von oben gekrümmt verläuft und zwar derart, dass bezogen auf die Fahrtrichtung (4) die Hüllkurve (10) konkav ausgestaltet ist.

7. Fahrwerk nach zumindest einem der vorstehenden Ansprüche, **dadurch gekennzeichnet, dass** zumindest den jeweils seitlich äußersten Reifen (8') der Walze (1) eine Bremseinrichtung zugeordnet ist.
